# DEMANDE DE BREVET EUROPEEN

(11) **EP 4 060 395 A1**
(43) Date de publication de la demande: **21.09.2022**
(21) Numéro de dépôt: 22162422.4
(22) Date de dépôt: 16.03.2022
(51) Int. Cl.: G02B 25/00, G02B 25/02, G02B 27/01, G02C 9/02, G02C 11/04, G02C 11/00, G02B 27/02, G02C 7/08, G04D 7/00

(54) **LOUPE D'HORLOGER**

(30) Priorité: 16.03.2021 EP 21162999
(71) Demandeur: ROLEX SA, 1211 Genève 26 (CH)
(72) Inventeur: BRANDT, Robin, 1211 Genève (CH); CERUTTI, MARC, 1211 Genève (CH); THÉOBALD, Olivier, 1211 Genève (CH)
(74) Mandataire: Moinas & Savoye SARL

(57) **Abrégé**

Loupe d'horloger (100; 100') monoculaire, apte à être positionnée ou portée devant ou à proximité d'un œil d'un utilisateur, la loupe d'horloger comprenant :
- un premier axe optique (A1),
- un corps de loupe d'horloger (10 ; 10'), notamment un corps sensiblement cylindrique, et
- un dispositif d'acquisition (200 ; 200') d'au moins une partie des images vues par l'utilisateur au travers de la loupe d'horloger.

## Description

L'invention concerne un dispositif optique, notamment une loupe d'horloger. L'invention concerne aussi un système portatif comprenant un tel dispositif optique.

La loupe d'horloger est le principal dispositif optique qu'utilise un horloger. En effet, les grossissements qu'elle permet, son faible encombrement et sa légèreté en font un outil particulièrement ergonomique et apprécié pour ausculter et intervenir sur des éléments de petite taille tels que ceux rencontrés dans une montre ou un mouvement horloger.

Toutefois, cet outil ne permet pas à l'horloger de partager son axe de vision avec des personnes tierces pour montrer certains détails, comme par exemple un assemblage, un réglage, une lubrification ou une usure. Pour ce faire, il existe aujourd'hui des binoculaires-doubles, qui éventuellement équipées d'une caméra permettent de partager la vision de l'horloger. Cependant, ces binoculaires sont relativement encombrantes et l'espace disponible sous l'objectif est très restreint, ce qui réduit considérablement l'espace de travail autour de l'objet à observer. De plus, ces binoculaires sont fixes et obligent l'horloger à manipuler la montre ou le mouvement pour l'orienter sous l'optique, ce qui est souvent incompatible avec certaines opérations qui requièrent que la montre ou le mouvement soit stabilisé à plat sur un établi. Avec ces outils, l'horloger n'a donc pas toute la liberté nécessaire pour effectuer certaines opérations comme avec une loupe. Certaines opérations sont même très délicates, voire impossibles à réaliser et à montrer correctement sous une binoculaire. Or, il est primordial que l'horloger puisse partager certaines problématiques ou son savoir-faire de façon optimale.

On connaît du document FR2368929 un dispositif, agencé sur un serre-tête, particulièrement adapté pour les chirurgiens, et permettant d'éclairer une zone de travail et de transmettre à un écran annexe des images de ladite zone de travail.

On connaît du document DE4436528 un dispositif de grossissement destiné à des applications mécaniques et médicales de précision. Ce dispositif est doté d'une caméra agencée sur un support assimilable à une paire de lunettes, avec un objectif dirigé selon une direction sensiblement parallèle et voisine de l'axe de vision de l'utilisateur. La caméra permet de diffuser à l'utilisateur, par notamment l'intermédiaire d'un écran, une vue agrandie dans la zone inférieure de son champ de vision. Dans la zone supérieure de son champ de vision, l'utilisateur bénéficie simultanément d'une vue directe.

Le but de l'invention est de fournir un dispositif optique permettant de remédier aux inconvénients mentionnés précédemment et d'améliorer les dispositifs optiques connus de l'art antérieur. En particulier, l'invention propose un dispositif optique compact et portable permettant l'enregistrement et/ou le partage du champ de vision d'un horloger.

Un dispositif optique selon l'invention est défini par la revendication 1.

Différents modes de réalisation du dispositif optique sont définis par les revendications 2 à 14.

Un système portatif selon l'invention est défini par la revendication 15.

Un mode de réalisation du système portatif est défini par la revendication 16.

Les dessins annexés représentent, à titre d'exemples, deux modes de réalisation d'un système portatif selon l'invention.
La figure 1 est une vue en perspective d'un premier mode de réalisation d'un système portatif.
La figure 2 est une vue en perspective éclatée du premier mode de réalisation du système portatif.
La figure 3 est une vue en perspective du premier mode de réalisation du système portatif (similaire à celle de la figure 1) avec un système optique à lentille déposé.
La figure 4 est une vue en coupe longitudinale partielle du premier mode de réalisation du système portatif au niveau d'un premier mode de réalisation d'un dispositif optique.
La figure 5 est une vue en coupe longitudinale partielle d'une variante du premier mode de réalisation du dispositif optique.
La figure 6 est une vue en perspective du premier mode de réalisation du système portatif (similaire à celle de la figure 1) avec un dispositif optique en position escamotée.
La figure 7 est une vue en coupe longitudinale partielle d'un deuxième mode de réalisation du système portatif au niveau d'un deuxième mode de réalisation du dispositif optique.
La figure 8 est un schéma électronique illustrant les modes de réalisation du dispositif optique.

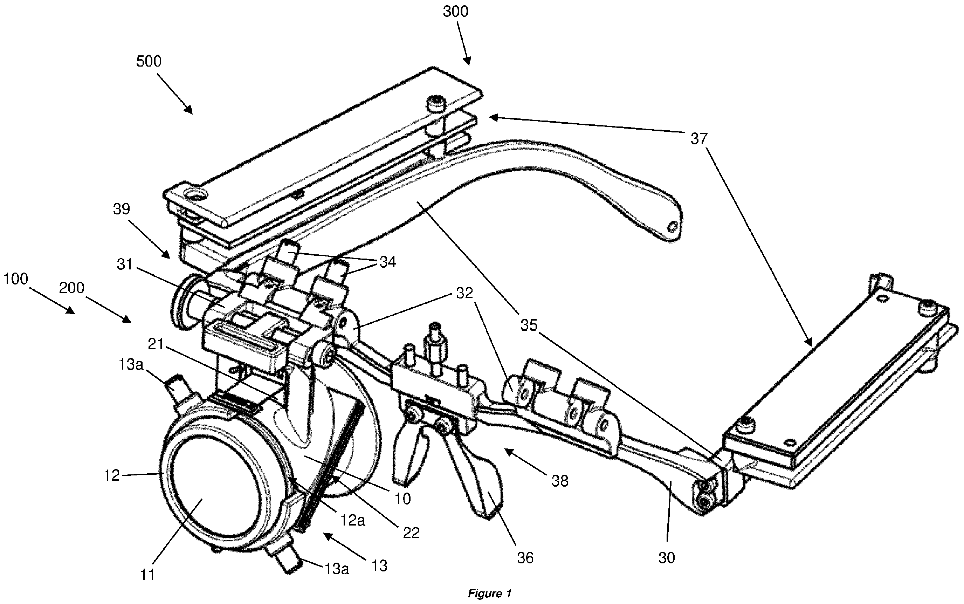

Un premier mode de réalisation d'un système portatif 500 est décrit ci-après en référence aux figures 1 à 6.

Le système portatif 500 comprend un premier mode de réalisation d'un dispositif optique 100 et un support 300, notamment une monture de lunettes 300, sur lequel est monté le dispositif optique 100, en particulier un corps 10 du dispositif optique.

En variante, le support peut être un casque ou un serre-tête.

Avantageusement, le dispositif portatif 500, plus particulièrement le support 300, comprend :
- un élément de réglage 38, 39 agencé de sorte à positionner le dispositif optique 100 relativement à l'œil de l'utilisateur, et/ou
- un ensemble de fixation 31, 32 agencé de sorte à permettre de dégager le dispositif optique 100 de l'œil de l'utilisateur ou d'escamoter le dispositif optique 100.

Cet élément de réglage et cet ensemble de fixation sont décrits plus en détail ci-après.

Le dispositif optique 100 est apte à être positionné ou porté devant ou à proximité d'un œil d'un utilisateur. Le dispositif optique comprend :
- un premier axe optique A1,
- un corps de dispositif optique 10, notamment un corps sensiblement cylindrique, et
- un dispositif d'acquisition 200 d'au moins une partie des images vues par l'utilisateur au travers du dispositif optique.

De préférence, le dispositif optique est un dispositif optique grossissant ou une loupe d'horloger. En particulier, le dispositif optique est avantageusement une loupe monoculaire.

Le dispositif d'acquisition 200 peut comprendre un capteur photographique ou vidéo 21. Le capteur 21 est de préférence une micro caméra haute définition. Le capteur 21 peut être équipé d'un système « autofocus ».

Afin de bénéficier d'images capturées avec un grossissement plus important que celles transmises vers l'œil de l'utilisateur, le capteur 21 peut aussi être équipé d'un système de grossissement d'image optique et/ou numérique.

Avantageusement, le capteur 21 peut encore être équipé d'un système de stabilisation d'images optique et/ou numérique. Le système de stabilisation d'images permet de filtrer notamment les potentiels tremblements appliqués au dispositif optique 100.

Le capteur 21 peut encore bénéficier d'un système de stabilisation horizontale de l'image. Le système de stabilisation horizontale de l'image permet de maintenir une image horizontale quelle que soit l'orientation du dispositif optique 100.

Plus généralement, le capteur 21 peut bien entendu bénéficier de tout moyen d'amélioration de la qualité des images ou des vidéos capturées.

Le dispositif d'acquisition 200 permet, à un instant donné, d'acquérir au moins une partie de ce que l'utilisateur peut voir dans son champ de vision au travers du dispositif optique. Il est bien sûr possible qu'à cet instant donné, le dispositif d'acquisition 200 permette d'acquérir la totalité de ce que l'utilisateur peut voir dans son champ de vision au travers du dispositif optique, voire plus que ce que l'utilisateur peut voir dans son champ de vision au travers du dispositif optique. Par ailleurs, l'acquisition peut être réalisée en continu au fil du temps. Néanmoins, il est possible de réaliser une acquisition uniquement à certains instants, pour la prise de photographies par exemple, ou pendant certaines périodes de temps définies.

Le dispositif d'acquisition 200 permettant d'acquérir au moins une partie des images vues par l'utilisateur au travers du dispositif optique, il existe une identité ou une quasi identité entre le point de vue de l'utilisateur et le point de vue du dispositif d'acquisition. En d'autres termes, la parallaxe entre ce que voit l'utilisateur et ce qui est acquis par le dispositif d'acquisition 200 est nulle ou minimisée autant que faire se peut. Préférentiellement, le défaut de coaxialité entre le premier axe optique A1 du dispositif optique et l'axe optique de l'utilisateur est inférieur à 0.2 mm, voire inférieure à 0.1 mm.

Afin de simplifier la description, le premier axe optique A1 du dispositif optique coïncide ici avec l'axe de vision ou l'axe optique de l'utilisateur. En d'autres termes, cet axe A1 représente l'orientation de la vision de l'utilisateur au travers du dispositif optique 100.

Ce premier mode de réalisation présente l'avantage de permettre une vue directe de l'utilisateur au travers du dispositif optique 100, sans que l'utilisateur ne puisse être perturbé par le dispositif d'acquisition.

Le corps 10 du dispositif optique 100 se présente sous la forme d'un tube au moins partiellement creux et évasé à une première extrémité destinée à être positionnée à proximité de l'œil de l'utilisateur, notamment à épouser l'orbite oculaire de l'utilisateur. Ce corps est de préférence destiné à supporter un système optique 11 à une deuxième de ses extrémités.

Le diamètre et/ou la forme de la première extrémité du corps 10 sont de préférence adaptés de manière que l'utilisateur puisse loger le dispositif optique 100 sur son orbite oculaire à l'instar d'une loupe d'horloger conventionnelle.

L'axe de révolution du corps 10 est coaxial ou sensiblement coaxial à l'axe A1.

Le dispositif d'acquisition 200 est agencé au sein du dispositif optique 100. Ce dispositif d'acquisition 200 comprend le capteur 21, avantageusement agencé de manière à filmer ou acquérir une ou plusieurs images selon le même ou sensiblement selon le même axe A1. Le capteur 21 permet avantageusement de convertir un rayonnement lumineux l'impactant en un ensemble de données numériques permettant de définir une image déterminée par le rayonnement lumineux.

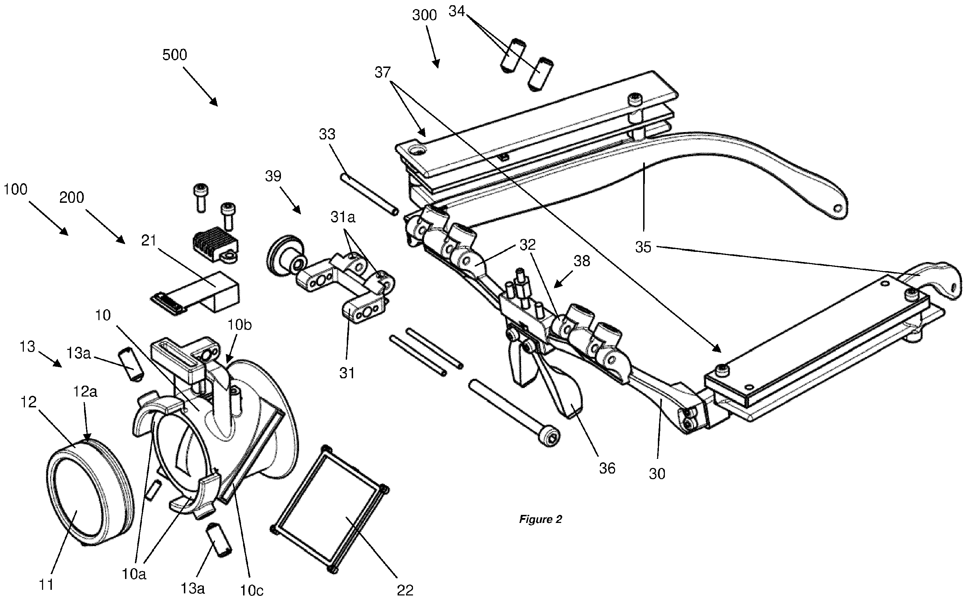

Dans le premier mode de réalisation du dispositif optique 100, ce capteur 21 est de préférence agencé sur la périphérie extérieure du corps 10 au sein d'un logement 10b (visible sur la figure 2), en dehors du champ visuel de l'utilisateur. Le capteur 21 est agencé de manière à ne pas gêner l'utilisateur dans ses opérations sur l'objet qu'il est en train d'observer au travers du dispositif optique 100. En d'autres termes, l'utilisateur doit pouvoir intervenir avec des outils et s'approcher suffisamment près de l'objet tout en pouvant l'orienter librement face à l'axe A1 de vision sans qu'il soit gêné par le dispositif optique 100. De ce fait, le capteur 21 est préférentiellement agencé au-dessus du corps 10, à l'opposé de l'établi ou de l'espace de travail de l'utilisateur, tout en s'inscrivant dans l'encombrement longitudinal, selon l'axe A1 du corps 10.

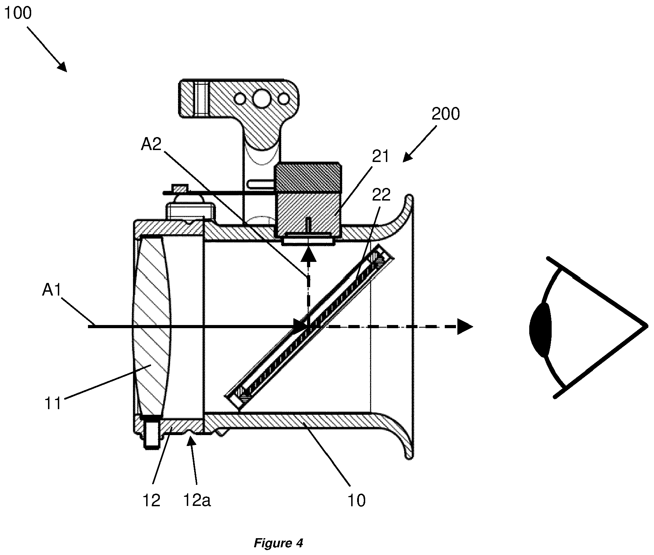

En outre, comme illustré par la figure 4, l'axe d'acquisition du capteur 21 est préférentiellement orienté perpendiculairement à l'axe A1 de vision, selon un axe A2.

De préférence, le dispositif optique 100 est conformé de manière qu'il soit facile d'identifier la position du capteur 21 dans l'espace, afin que le capteur soit toujours positionné vers le haut par l'utilisateur. Par exemple, le dispositif optique 100 et/ou le dispositif portatif 500 peut comprendre un détrompeur empêchant l'utilisateur d'orienter le dispositif optique avec le capteur 21 en-dessous du corps 10 (en configuration d'utilisation du dispositif optique par l'utilisateur).

Etant donné que le capteur 21 est orienté selon l'axe A2 qui est préférentiellement perpendiculaire à l'axe A1 de vision, il est indispensable de dévier une partie de la lumière captée par le dispositif optique 100 vers le capteur 21. Pour ce faire, le dispositif optique 100 comprend un miroir semi-transparent 22 agencé au sein du corps 10. Le miroir semi-transparent 22 permet de renvoyer une première partie de la lumière issue de la scène ou de l'objet observé et de la propager globalement selon l'axe A1, vers le capteur 21 selon l'axe A2. Avantageusement, une deuxième partie de la lumière n'est pas renvoyée et traverse le miroir semi-transparent selon l'axe A1 afin que l'utilisateur puisse voir la scène ou l'objet observé au travers de ce miroir semi-transparent.

Avantageusement, l'agencement du miroir semi-transparent 22 au sein du dispositif optique 100 permet au capteur de capturer des images depuis le même ou sensiblement le même axe A1 de vision que l'utilisateur.

Le miroir semi-transparent 22 est de préférence agencé dans un logement 10c réalisé dans le corps 10 (comme visible sur la figure 2). Ce logement 10c se présente ici sous la forme d'une fente inclinée (notamment inclinée à 45°) en regard de l'axe A1. Cette fente permet d'insérer le miroir semi-transparent 22. Le miroir semi-transparent 22 peut être maintenu en place dans ce logement 10c, notamment par une vis.

Il est à noter que les images captées par le capteur sont inversées du fait du miroir semi-transparent. Ces images peuvent être corrigées (à savoir de nouveau inversées) par un traitement numérique.

La forme extérieure du miroir semi-transparent 22 est, dans la variante de réalisation représentée, carrée. Alternativement, la forme extérieure du miroir semi-transparent et du logement destiné à l'accueillir peuvent être différentes. On peut par exemple mettre en œuvre un miroir semi-transparent de forme circulaire ou elliptique. Le miroir semi-transparent peut être assemblé au corps depuis l'une des extrémités du corps. Le miroir semi-transparent peut également par exemple être clipsé, chassé ou collé dans le logement 10c.

Le logement 10c permet notamment d'orienter le miroir semi-transparent selon un angle prédéfini relativement à l'axe A1.

Dans la variante de réalisation spécifique illustrée par les figures 1 à 5, l'angle mesuré entre l'axe A1 et l'axe A2 est de 90°. Par conséquent, le miroir semi-transparent est ici agencé selon un angle de 45° par rapport à l'axe A1 et par rapport à l'axe A2 du capteur.

Alternativement, l'axe A2 du capteur peut ne pas être perpendiculaire à l'axe A1 mais, par exemple, parallèle et non coaxial. Un miroir supplémentaire devrait alors être agencé pour dévier la lumière déjà déviée par le miroir semi-transparent selon cette nouvelle orientation de l'axe A2. Alternativement encore, l'axe A2 peut former un angle non nul et différent de 90° avec l'axe A1.

Le miroir semi-transparent 22 est, par exemple, prévu pour dévier, vers le capteur 21, 50% de la lumière l'impactant. Il y a donc, dans cet exemple, 50% de lumière non déviée qui atteint l'œil de l'utilisateur.

Alternativement, le miroir semi-transparent peut dévier une proportion différente de lumière vers le capteur 21. Cette proportion peut varier de 10% à 90% en fonction de la sensibilité du capteur et/ou en fonction de la proportion de lumière que l'on souhaite diriger vers l'œil de l'utilisateur.

Ainsi, le miroir semi-transparent 22 est agencé au sein du corps 10 de sorte :
- à dévier une première partie des rayons lumineux entrant dans le dispositif optique 100 vers le capteur 21, et
- à laisser passer, à travers lui, vers l'œil de l'utilisateur, une deuxième partie des rayons lumineux entrant dans le dispositif optique 100.

Plus généralement, le miroir semi-transparent peut se présenter sous la forme de tout composant optique permettant la séparation de faisceaux.

Le capteur 21 est prévu pour acquérir des images ou des vidéos. Ces images, sous formes de données, peuvent ensuite être envoyées pour être diffusées en temps réel ou en léger différé, ou pour être traitées. Ceci permet à des personnes tierces de voir, grâce à un écran annexe, ce que voit l'utilisateur au travers du dispositif optique 100, selon l'axe A1 de vision. Bien entendu, les vidéos et les images capturées par le capteur peuvent aussi être enregistrées et visualisées en différé.

Pour ce faire, le dispositif optique 100 comprend un élément de communication 50 apte à transmettre les données générées par le dispositif d'acquisition 200 et/ou apte à transmettre des données vers le dispositif d'acquisition 200.

Par exemple, le capteur 21 est alimenté et transmet les données grâce à un câble de type « USB ». De préférence, afin d'alléger au maximum le dispositif optique 100, le module électronique nécessaire au fonctionnement du capteur n'est pas agencé sur le dispositif optique 100 mais est déporté. Dans le même but, le stockage des données se fait sur un périphérique annexe, comme par exemple un ordinateur.

Toutefois, au vu des avancées technologiques des composants électroniques et plus particulièrement de la miniaturisation des micro-capteurs équipant par exemple les micro-caméras, il est tout à fait envisageable de pouvoir agencer un tel capteur ou une telle caméra haute définition capable de stocker ou de transmettre les données capturées sans fil et en direct, par exemple selon un protocole Wifi. Le capteur peut aussi comprendre une batterie miniature permettant de se passer de câble d'alimentation.

A cette fin, le dispositif optique peut comprendre un premier élément de chargeur à induction afin de recharger la batterie. Entre deux utilisations, l'utilisateur peut ainsi poser le dispositif optique sur un support disposant d'un deuxième élément de chargeur à induction, et recharger ainsi la batterie du dispositif.

Le dispositif optique 100 comprend de préférence un système optique 11 comprenant une ou plusieurs lentilles 11, en particulier une lentille 11, maintenue par un moyen de retenue 13 sur le corps 10.

Le moyen de retenue 13 est un moyen de retenue par friction, par clipsage ou par obstacle, notamment un moyen de retenue 13 agencé de sorte à permettre une dépose et/ou un montage du système optique 11 sans utilisation d'un outil.

Le système optique 11 comprend par exemple une ou plusieurs lentilles 11, ou consiste par exemple en une ou plusieurs lentilles 11. Le système optique 11 peut comprendre une lentille biconvexe agencée perpendiculairement ou sensiblement perpendiculairement à l'axe A1. Alternativement, la lentille 11 peut aussi par exemple être de forme plan-convexe.

Bien entendu, la dimension de ce système optique 11 et sa localisation par rapport à l'œil de l'utilisateur, selon l'axe A1, est judicieusement prédéfinie de manière à offrir un dispositif optique offrant un champ visuel et un grossissement adaptés aux besoins de l'utilisateur.

Avantageusement, le système optique 11 est agencé au sein d'une bague 12 de préférence cylindrique. Cette bague 12 permet de centrer le système optique 11 sur le corps 10 du dispositif optique 100. Plus particulièrement, la géométrie du corps 10 est notamment destinée à permettre le centrage du système optique 11 par l'intermédiaire de la bague 12. De préférence, le système optique 11 est centré sur l'axe A1.

Par exemple, le système optique 11 est maintenu serré dans la bague 12 par une vis. Alternativement, le système optique 11 peut être assemblé sur la bague par tout autre moyen permettant de les solidariser. Le système optique 11 et la bague 12 peuvent même être fabriqués d'un seul tenant. Alternativement encore, le système optique 11 peut être directement assemblé sur le corps 10 et ainsi être solidaire du corps 10.

Comme illustré par les figures 1, 2 et 3, la deuxième extrémité du corps 10 présente un logement 10a destiné à accueillir le système optique 11, plus particulièrement la bague 12. Ce logement 10a comprend deux portions cylindriques concentriques à l'axe A1, dont les diamètres intérieurs sont définis de sorte à s'ajuster sur le diamètre extérieur de la bague 12. En outre, le logement 10a est également doté d'une butée axiale selon l'axe A1 permettant de garantir une distance prédéfinie entre le système optique 11 et la deuxième extrémité du corps 10, et plus particulièrement l'œil de l'utilisateur.

Le système optique 11 est maintenu assemblé sur le corps 10 par un moyen de retenue 13 destiné à coopérer avec la bague 12. Plus particulièrement, le moyen de retenue 13 se présente sous la forme de poussoirs à ressort à bille ou de poussoirs à bille 13a destinés à coopérer avec une gorge 12a de la bague 12.

La gorge 12a est agencée sur la circonférence de la bague 12 et présente ici une section en forme de « V ».

Chacun des poussoirs à bille 13a se présente sous la forme d'une vis sans tête comprenant en son sein une bille repoussée par un ressort à l'une de ses extrémités et une fente destinée à coopérer avec un tournevis à l'autre de ses extrémités.

Les deux poussoirs à bille 13a sont par exemple agencés radialement relativement à l'axe A1 en périphérie du premier logement 10a. Plus particulièrement, ces poussoirs prennent place dans des trous taraudés au sein du corps 10 de manière à faire coopérer leur bille avec la gorge 12a de la bague. En plus d'être centré par le logement 10a, le système optique 11 est donc aussi maintenu axialement en position grâce à la conformation de la gorge 12a et des billes des poussoirs à bille 13a.

Chacun des ressorts de rappel des poussoirs à bille 13a permet de maintenir sa bille respective à l'encontre de la gorge 12a de la bague 12 de manière à exercer une force de maintien sur cette dernière. Ces composants sont dimensionnés de manière à garantir un maintien adéquat du système optique 11 sur le corps 10, de façon à éviter tout risque de désolidarisation intempestive dans des conditions usuelles d'utilisation.

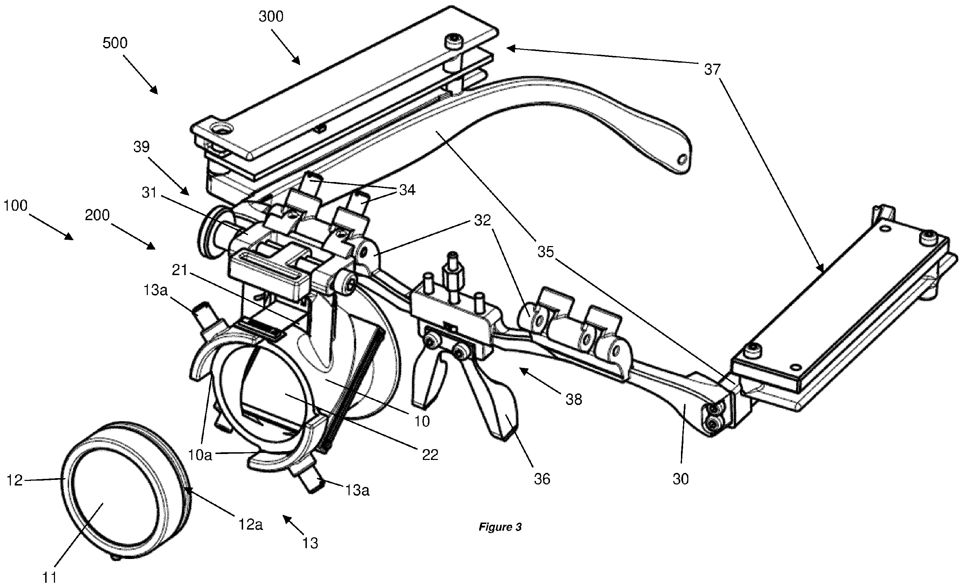

Avantageusement, les éléments du moyen de retenue 13 sont également dimensionnés de manière à permettre à l'utilisateur de pouvoir interchanger facilement le système optique 11 du dispositif optique 100 (comme représenté sur la figure 3). Plus particulièrement, l'effort axial selon l'axe A1 que doit fournir l'utilisateur pour rétracter les billes des poussoirs à bille 13a, et ainsi désolidariser le système optique 11 du corps 10, doit être suffisamment faible pour que l'opération puisse se faire rapidement et sans outil, voire même sans devoir retirer le dispositif optique 100 de l'axe de vision de l'horloger.

La friction générée par chacun des poussoirs à bille est réglable en ajustant la précontrainte des ressorts de rappel des poussoirs à bille. Pour ce faire, il suffit d'agir sur la tête de vis des poussoirs à bille 13a avec, par exemple, un tournevis pour visser ou dévisser ces poussoirs.

Alternativement, les poussoirs à billes peuvent être remplacés par des ressorts se présentant sous la forme de lames ou sous la forme d'une bague élastique concentrique à la gorge avec laquelle elle coopère.

Alternativement encore, le système optique 11, avec ou sans l'intermédiaire de la bague 12, peut être simplement clipsé ou légèrement chassé par l'intermédiaire ou non d'un élément élastique comme, par exemple, une bague élastique ou un joint torique.

En alternative, le système optique 11, plus particulièrement la bague 12, peut aussi être maintenu sur le corps par un système de baïonnette, voire vissé directement sur le corps.

Plus généralement, le moyen de retenue 13 peut être tout moyen permettant de retenir le système optique 11 sur le corps 10 par friction, frottement, clipsage, pincement et permettant à l'utilisateur de pouvoir les désolidariser sans nécessiter d'outil.

Le moyen de retenue 13 permet avantageusement à l'utilisateur de pouvoir interchanger facilement le système optique 11 du dispositif optique 100 en fonction de ses besoins, comme il le ferait avec des loupes d'horloger conventionnelles pour obtenir des grossissements différents.

Les grossissements typiques obtenus avec les systèmes optiques 11 qui peuvent être agencés sont de 2.5x à 25x.

Les systèmes optiques 11 et/ou les bagues 12 peuvent par exemple présenter des marquages ou des couleurs différentes afin de différentier les différents grossissements du dispositif.

Alternativement ou complémentairement, les systèmes optiques 11 peuvent aussi comprendre des filtres optiques permettant, par exemple, de mieux visualiser des défauts de fabrication, des usures de composants, des lubrifiants ou certains composants. Ces filtres optiques peuvent être combinés à un éclairage particulier pour mettre en avant certaines matières ou substances, à des fins d'identification ou de contrôle.

Avantageusement, le dispositif optique comprend un élément de projection 40, 41 de données visuelles visibles par l'utilisateur par affichage sur un écran faisant partie du dispositif optique et/ou par projection de rayons lumineux en direction de l'œil de l'utilisateur.

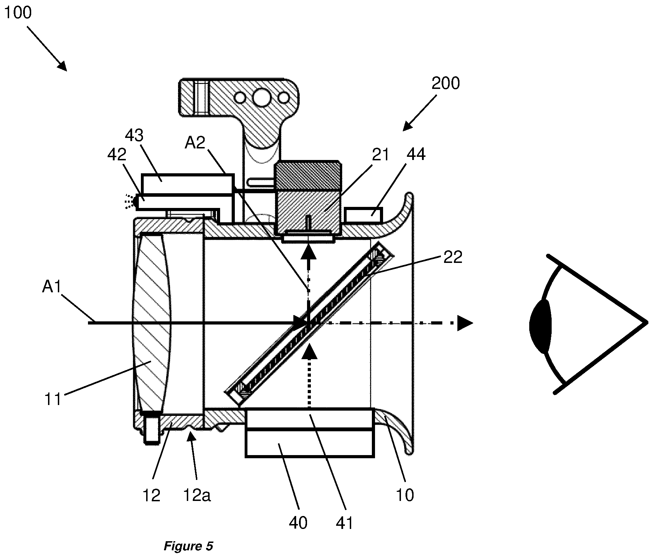

Des images ou des informations peuvent ainsi être directement ou indirectement projetées vers l'œil de l'utilisateur. Ces images ou informations peuvent se superposer à la vision directe de l'utilisateur. Pour ce faire, comme illustré par la figure 5, l'élément de projection 40, 41 peut comprendre un écran 40 agencé en périphérie du corps 10 et la lumière émise par cet écran peut être réfléchie vers l'œil de l'utilisateur par le miroir semi-transparent 22. Avantageusement, cet écran 40 peut être agencé coaxialement à l'axe A2 en périphérie du corps 10, de l'autre côté du capteur 21. Ainsi, l'élément de projection 40, 41 de données visuelles est agencé coaxialement au capteur 21 et à l'opposé du capteur 21 relativement au corps 10.

Cette conformation permet de tirer profit du miroir semi-transparent 22 pour dévier une partie de la lumière de l'écran 40 vers l'œil de l'utilisateur. L'autre partie de la lumière de l'écran 40, non déviée par le miroir semi-transparent, est avantageusement captée par le capteur 21. Le capteur 21 capte ainsi une partie de la lumière traversant le système optique 11 ainsi qu'une partie de la lumière venant de l'écran 40. En d'autres termes, le capteur 21 capture la même superposition d'images que l'œil de l'utilisateur. Ainsi, le miroir semi-transparent 22 peut être agencé de sorte
- à dévier une première partie des rayons lumineux émis par l'élément de projection 40, 41 vers l'œil de l'utilisateur, et
- à laisser passer, à travers lui, une deuxième partie des rayons lumineux émis par l'élément de projection 40, 41.

Etant donné que les images projetées par l'écran 40 sont déviées vers l'utilisateur par le miroir semi-transparent 22, il est nécessaire que ces images soient projetées inversées pour que l'utilisateur puisse les voir dans le bon sens. L'inversion des images projetées par l'écran 40 ne pose en outre pas de problème vis-à-vis du capteur 21, car les images captées depuis le système optique 11 sont aussi déviées et inversées par le miroir semi-transparent. La superposition d'images résultants respectivement du système optique 11 et de l'écran 40 est ainsi cohérente.

Un jeu de lentilles 41 peut par ailleurs être agencé entre l'écran 40 et l'œil de l'utilisateur de façon à corriger et/ou à adapter l'image projetée à la vision de l'utilisateur.

L'écran peut être agencé de tout autre façon permettant à l'utilisateur du dispositif optique d'en bénéficier directement ou indirectement.

L'image projetée vers l'œil de l'utilisateur peut bénéficier d'un traitement d'images, voire même d'un traitement résultant d'une intelligence artificielle capable de reconnaître les éléments captés par le capteur 21. Ainsi, par l'intermédiaire de l'écran 40, il est par exemple possible de superposer à la vision de l'utilisateur :
- des éléments permettant de mettre en surbrillance ou en évidence des éléments observés,
- des instructions d'assemblage,
- des quantités et des localisations de lubrifiants à appliquer,
- des références d'éléments,
- la marche, l'amplitude et le repère d'un oscillateur horloger,
- plus généralement, toute image ou information susceptible d'intéresser l'utilisateur et/ou les personnes consultant les images capturées sur un écran annexe.

Le dispositif optique 100 peut encore comprendre un élément d'éclairage 42, notamment un élément d'éclairage disposé de sorte à éclairer ou émettre de la lumière. L'élément d'éclairage permet, d'une part, de faire bénéficier de plus de lumière à l'utilisateur dans des zones par exemple difficilement accessibles et, d'autre part, de fournir avantageusement plus de lumière pour le capteur 21. Préférentiellement, l'élément d'éclairage 42 peut être agencé sur le corps 10 et éclairer en direction de l'objet observé ou de la scène observée, comme illustré sur la figure 5. L'élément d'éclairage peut être disposé coaxialement au corps 10. Il peut en outre être de forme annulaire et coaxiale à l'axe A1.

Alternativement, l'élément d'éclairage 42 peut aussi être agencé coaxialement à l'axe A2, du même côté que le capteur 21, et éclairer en direction du miroir semi-transparent 22. Avec cet agencement, l'objet observé est ainsi éclairé coaxialement ou sensiblement coaxialement à l'axe A1 de vision grâce à la déviation des faisceaux par le miroir semi-transparent 22. Dans ce dernier cas, il est d'ailleurs judicieux de choisir un miroir semi-transparent 22 permettant de bénéficier d'une grande portion de lumière déviée vers l'élément observé.

L'élément d'éclairage peut aussi être asymétrique et/ou offrir plusieurs intensités lumineuses. Il peut aussi être composé de plusieurs sources lumineuses, voire même offrir plusieurs types d'éclairages avec, par exemple, différentes longueurs d'ondes. L'utilisateur peut moduler, via une interface, ces différentes possibilités en fonction de ses besoins.

L'élément d'éclairage 42 peut comprendre une source de lumière comme une diode électroluminescente LED ou OLED ou un guidage de lumière par fibre optique ou guide de lumière.

L'élément d'éclairage 42 peut aussi émettre un rayonnement ultra-violet afin de permettre de mieux visualiser certains lubrifiants spécifiques à l'aide ou non d'un filtre optique adéquat.

Le dispositif optique 100 peut également comprendre un microphone 43 et un module 53 d'interprétation de sons, notamment un module 51 d'interprétation de commandes vocales.

Le module 51 d'interprétation de commandes vocales permet par exemple de commander le dispositif d'acquisition 200 et/ou l'élément de communication 50 et/ou l'élément de projection 40, 41 et/ou l'élément d'éclairage 42 et/ou un module 52 de traitement d'un signal sonore permettant de déterminer la marche d'un mouvement dont les sons sont acquis par le microphone 43. Il est ainsi possible de commander certaines fonctions du dispositif optique 100, comme par exemple activer ou désactiver le capteur 21, modifier son grossissement ou contrôler l'affichage de l'écran 40.

En particulier, le module 53 d'interprétation de sons peut comprendre un chronocomparateur 52 permettant de procéder à des mesures de marche, d'amplitude et du repère d'un mouvement horloger mécanique en interprétant les bruits que fait un dispositif d'échappement. On peut aussi procéder à l'interprétation du bruit de certains éléments en réponse à une sollicitation mécanique.

Le microphone 43 permet en outre l'acquisition de commentaires émanant de l'utilisateur ou de bruits issus de l'objet observé.

Dans le mode de réalisation décrit, le dispositif optique 100 est prévu pour être monté sur un support, comme une monture de lunettes 300, le support et le dispositif optique constituant un système portatif ou portable 500. Le support et le dispositif optique sont alors agencés pour positionner le dispositif optique en regard ou à proximité de l'œil de l'utilisateur.

Toutefois, en variante, le dispositif optique 100 peut être prévu pour être porté en le fixant à l'orbite oculaire de l'utilisateur à l'instar d'une loupe d'horloger conventionnelle, notamment sans support 300, en particulier sans monture. Dans une telle hypothèse, comme évoqué précédemment, le corps 10 est conformé à une de ses extrémités de sorte à être positionné au contact du visage de l'utilisateur et de sorte à s'adapter à la morphologie du visage de l'utilisateur.

Dans le mode de réalisation représenté sur les figures 1 à 6, le dispositif portatif est prévu pour être porté par l'utilisateur comme une paire de lunettes conventionnelle, comme illustré en particulier par les figures 1 et 2.

La monture 300 comprend un cadre 30 et deux branches 35 ainsi qu'un premier moyen de réglage 38 doté d'un pont de nez 36 réglable en hauteur afin de s'adapter à la morphologie de l'utilisateur.

Alternativement, le premier moyen de réglage 38 de la hauteur du dispositif optique 100 par rapport à l'œil de l'utilisateur peut aussi être agencé ailleurs sur le dispositif portatif 500, par exemple à une interface entre la monture 300 et le dispositif optique 100.

Dans cet exemple, les branches 35 sont assemblées sur le cadre 30 de façon rigide, par des vis. Alternativement, les branches 35 peuvent aussi être assemblées avec des charnières, réglables ou non, comme sur une paire de lunettes conventionnelle.

La monture 300 peut aussi comprendre des éléments de support 37 qui permettent de fixer des éléments électroniques du dispositif optique et/ou de guider des câbles d'alimentation et de transfert de données afin que ceux-ci ne gênent pas l'utilisateur. Ces éléments de support 37 sont, par exemple, agencés sur les branches 35.

La monture 300 comprend un ensemble de fixation 31, 32 disposé à l'interface du cadre 300 et du dispositif optique 100. Cet ensemble de fixation 31, 32 permet de relier le corps 10 au cadre 30. L'ensemble de fixation comprend un premier moyen de fixation 31 guidé et serré sur le corps 10, par exemple à l'aide de deux goupilles, une vis et un écrou comme illustré sur la figure 2. Cet agencement présente un deuxième moyen de réglage 39 qui permet en outre de régler la position du corps 10 par rapport à l'œil de l'utilisateur selon une direction transversale correspondant à l'étendue du cadre 30.

Bien entendu, ce premier moyen de fixation 31 peut être fixé au corps 10 par tout autre moyen. En alternative, il peut être d'un seul tenant avec le corps 10.

Alternativement, le deuxième moyen de réglage 39 de la position transversale du dispositif optique 100 par rapport à l'œil de l'utilisateur peut aussi être agencé ailleurs sur le dispositif portatif 500, par exemple, sur le cadre 30 de la monture 300.

Le premier moyen de réglage 38 et le deuxième moyen de réglage 39 constituent avantageusement un ensemble de réglage 38, 39 permettant de régler précisément la position du dispositif optique 100 sur la monture 300 relativement à la position de l'œil de l'utilisateur.

L'ensemble de fixation 31, 32 comprend un deuxième moyen de fixation 32 destiné à fixer le premier moyen de fixation 31 par une liaison pivot. Cette liaison pivot est concrétisée par un axe 33 traversant l'ensemble de fixation 31, 32 de façon à être chassé dans le premier ou le deuxième moyen de fixation 31, 32 et à permettre le pivotement du premier moyen de fixation 31 relativement au deuxième moyen de fixation 32.

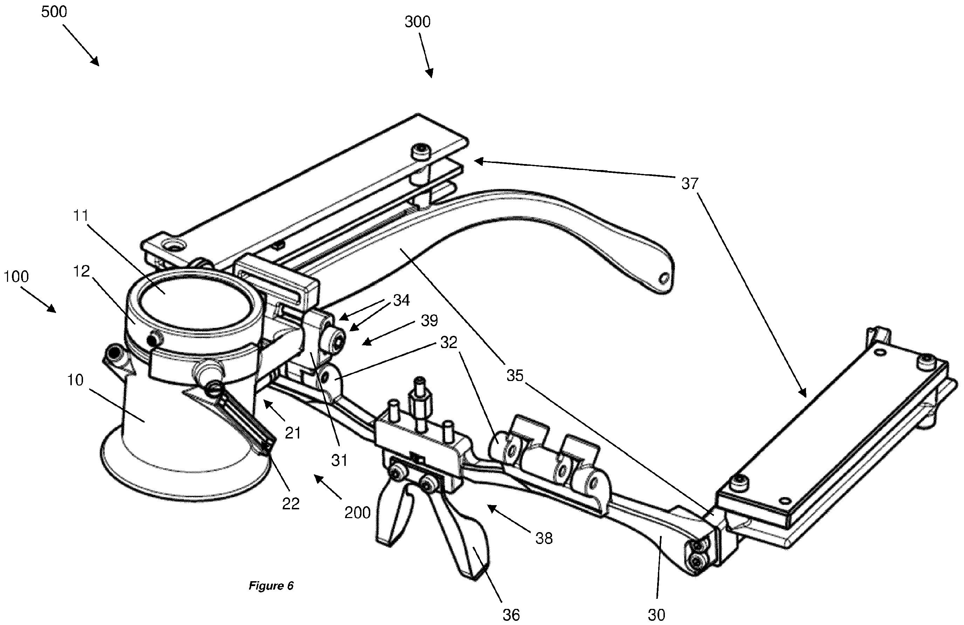

En outre, le deuxième moyen de fixation 32 comprend aussi deux poussoirs à ressort à bille 34 sensiblement identiques aux poussoirs à bille 13a précédemment décrits. Ces deux poussoirs à ressort à bille 34 ou poussoirs à bille 34 sont agencés radialement relativement à l'axe 33 et sont destinés à coopérer avec des encoches 31a agencées sur le premier moyen de fixation 31. La conformation des poussoirs à bille 34 au sein de ces encoches 31a, ainsi que la liaison pivot précédemment décrite, permettent avantageusement de prédéfinir deux positions relatives stables, soit deux positions d'indexation, du dispositif optique 100 par rapport à la monture 300. Une première position (représentée sur la figure 1), dite de travail, correspond à la position du dispositif optique 100 aligné avec l'œil de l'utilisateur. Une deuxième position (représentée sur la figure 6), dite dégagée ou escamotée, correspond à la position dégagée ou partiellement dégagée du champ visuel de l'utilisateur.

Ainsi, le dispositif optique 100 peut être avantageusement escamoté ou dégagé vers le haut afin que ce dernier n'empiète pas sur l'espace de travail de l'utilisateur. Cela évite aussi que l'utilisateur ait besoin de retirer la monture 300 de sa tête entre deux opérations ou lorsque l'usage du dispositif optique n'est pas nécessaire. L'utilisateur bénéficie ainsi d'une fonctionnalité comparable à celle d'une loupe d'horloger agencée sur une monture de lunette ou sur un serre-tête conventionnel.

Avantageusement, un deuxième moyen de fixation 32 peut être agencé devant l'autre œil de l'utilisateur. Ainsi, le dispositif optique 100 peut être fixé devant l'œil droit ou gauche.

Avantageusement encore, pour plus de confort, le cadre 30 peut comprendre aussi des verres de correction adaptés à la vue de l'utilisateur.

Enfin, l'ensemble de la monture 300 est construit de manière à dégager un maximum l'espace de travail autour du dispositif optique 100, dans le but de laisser un maximum de liberté à l'utilisateur, comme lors de l'utilisation d'une loupe d'horloger conventionnelle. C'est pourquoi le capteur 21 et l'ensemble de fixation 31, 32 sont préférentiellement agencés au-dessus du dispositif optique 100.

Alternativement, le support peut être un casque ou un serre-tête semblable à ceux déjà utilisés par les horlogers.

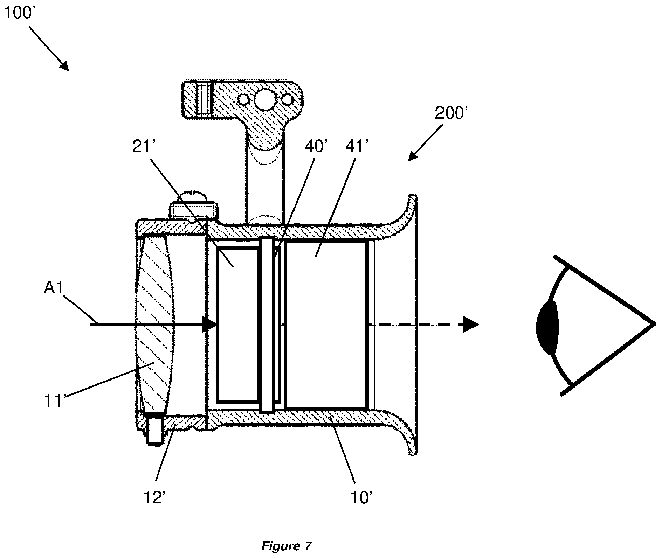

Un deuxième mode de réalisation d'un système portatif est décrit ci-après en référence à la figure 7. Ce deuxième mode de réalisation diffère en ce qu'il comprend un deuxième mode de réalisation d'un dispositif optique 100' tel que représenté sur la figure 7.

Les références d'éléments du deuxième mode de réalisation se déduisent de celles d'éléments du premier mode de réalisation (ayant des structures identiques ou sensiblement identiques et/ou des fonctions identiques ou sensiblement identiques) par l'ajout d'une apostrophe « ' ».

De préférence, le deuxième mode de réalisation diffère du premier mode de réalisation seulement en ce que le dispositif optique 100' comprend un dispositif d'acquisition 200' comprenant un capteur 21' agencé au sein d'un corps 10'.

De préférence, le dispositif optique 100' comprend encore un écran 40', le capteur 21' et l'écran 40' étant agencés au sein du corps 10', notamment coaxialement au premier axe optique A1.

Ainsi, comme illustré par la figure 7, l'utilisateur ne bénéficie pas d'une vue directe au travers du dispositif optique 100' dans ce deuxième mode de réalisation. En effet, l'observation se fait exclusivement par l'intermédiaire d'un écran 40'. Cependant, cette conformation peut permettre à l'utilisateur de bénéficier d'une vue entièrement filtrée et traitée numériquement. Ainsi, grâce à un traitement d'images adéquat, il est par exemple possible d'occulter complètement certains éléments ou des reflets de lumière dans le but d'accroître le confort de l'utilisateur, et/ou d'obtenir une profondeur de champ plus élevée que par vision directe, et/ou d'ajuster automatiquement la luminosité et le contraste de l'image.

Dans ce deuxième mode de réalisation, le capteur 21' du dispositif d'acquisition 200' est agencé au sein du corps 10' selon l'axe A1. Ce capteur 21' est prévu pour capter la lumière passant au travers d'un système optique 11'. L'image captée par le capteur 21' est diffusée par l'écran 40' également agencé au sein du corps 10', de façon à projeter l'image en direction de l'œil de l'utilisateur selon l'axe A1. Comme pour le premier mode de réalisation, un jeu de lentilles 41' peut être agencé entre l'œil de l'utilisateur et l'écran 40' afin de corriger et/ou d'adapter l'image projetée vers l'œil de l'utilisateur.

A la différence de ce qui est décrit dans le premier mode de réalisation, selon les fonctionnalités du capteur 21', il n'est pas indispensable d'agencer un système optique 11' au sein du dispositif. En effet, le capteur 21' peut avantageusement permettre des grossissements de 2.5x à 25x et peut rendre le système optique 11' potentiellement superflu.

Par contre, hormis ces agencements spécifiques concernant ce deuxième mode de réalisation, l'ensemble des fonctionnalités et alternatives précitées dans le premier mode de réalisation peuvent être transposées à ce deuxième mode de réalisation.

De préférence, quel que soit le mode de réalisation, l'encombrement longitudinal du dispositif optique (selon l'axe A1), mesuré de la première à la deuxième extrémité du corps 10, est par exemple de l'ordre de quelques centimètres, en particulier de l'ordre de 4 cm (mesuré parallèlement à l'axe optique A1).

De préférence, quel que soit le mode de réalisation, le dispositif optique (sans tenir compte d'éventuels moyens de fixation reliant le corps au support) est inclus dans un cylindre présentant un rayon de 1.8 cm ou de 2 cm ou de 2.5 cm autour de l'axe optique A1.

Quel que soit le mode de réalisation, à l'instar d'une loupe d'horloger conventionnelle, le dispositif optique est destiné à un travail de grande proximité. En l'occurrence, le dispositif optique est configuré de sorte que la distance permettant de voir net, entre la lentille et l'objet à observer, est d'approximativement 8 cm à moins de 1 cm, voire moins de 0.5 cm, en fonction du grossissement de la lentille.

Par exemple, ladite distance est d'approximativement 8 cm pour une lentille de 2.5x, alors que pour une lentille à fort grossissement, par exemple de 10x ou plus, ladite distance est d'approximativement moins de 1 cm, voire moins de 0.5 cm.

Le grossissement le plus souvent utilisé est de 4x. Avec ce grossissement, ladite distance est d'approximativement 3 - 4 cm.

Ces distances sont fournies pour une acuité visuelle non altérée de l'utilisateur. Il est à noter que cette distance peut sensiblement varier en fonction de l'acuité visuelle de l'utilisateur.

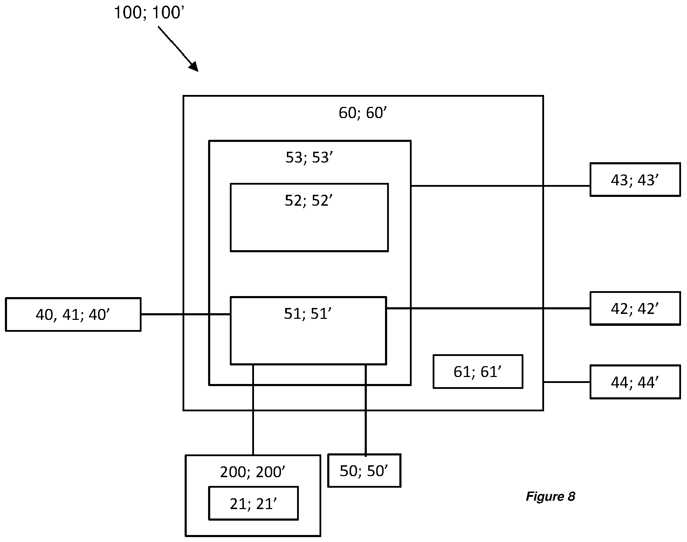

Quel que soit le mode de réalisation, comme représenté sur la figure 8, le dispositif optique 100 ; 100' peut comprendre une unité logique de traitement 60 ; 60' comprenant :
- une mémoire 61 ; 61',
- un module 53 ; 53' d'interprétation de sons incluant un module 51 ; 51' d'interprétation de commandes vocales permettant de commander le dispositif d'acquisition 200 ; 200' et/ou l'élément de communication 50 et/ou l'élément de projection 40, 41 ; 40' et/ou un élément d'éclairage 42 ; 42', et un module de traitement d'un signal sonore 52 ; 52', notamment un chronocomparateur 52 ; 52', permettant de déterminer la marche d'un mouvement dont les sons sont acquis par un microphone 43 ; 43'.

Quel que soit le mode de réalisation, dans le cas où l'on souhaite faire afficher la marche, l'amplitude et le repère d'un oscillateur horloger, le dispositif optique 100 ; 100', plus particulièrement l'écran 40 ; 40', peut être couplé à un dispositif capable de réaliser ce type de mesure. En l'occurrence, le dispositif optique 100 ; 100' peut comprendre un appareil tel qu'un chronocomparateur.

Quel que soit le mode de réalisation, on peut aussi, par exemple, coupler le dispositif optique 100 ; 100' à un dispositif capable de réaliser des mesures de couples ou de forces, et à projeter, par l'intermédiaire de l'écran 40 ; 40', les valeurs de ces mesures vers l'œil de l'utilisateur.

En alternative, un chronocomparateur peut aussi être couplé au dispositif optique. Le son est alors communiqué au chronocomparateur, puis les valeurs déterminées par le chronocomparateur sont projetées pour être visibles par l'utilisateur.

Le fait de pouvoir renseigner l'utilisateur avec des valeurs mesurées en temps réel permet avantageusement à ce dernier de pouvoir consulter ces valeurs sans quitter l'observation de l'objet au travers du dispositif optique.

Quel que soit le mode de réalisation, le dispositif optique 100 ; 100' peut aussi comprendre une interface homme-machine 44 ; 44' à boutons ou touches, par exemple de type bouton poussoir, qui permet de commander les fonctions du dispositif optique. Le bouton poussoir de l'interface 44 ; 44' peut être capacitif ou non.

Quel que soit le mode de réalisation, les données recueillies peuvent permettre l'affichage d'images sur un écran annexe permettant de visualiser les images diffusées et/ou enregistrées par le dispositif optique 100 ; 100'. Cet écran peut être un téléviseur, un moniteur d'ordinateur, un écran de « smartphone » ou de tablette numérique ou encore tout autre support numérique susceptible de permettre la visualisation d'images et/ou de vidéos. Il en va de même pour les données numériques fournies par le dispositif optique 100 ; 100' qui peuvent être exploitées ou stockées par tout support numérique pouvant lire ces données, comme par exemple une carte mémoire, un ordinateur, un « smartphone » ou une tablette numérique, ou encore tout autre support numérique susceptible de pouvoir exploiter ou stocker des données numériques.

Quel que soit le mode de réalisation, le système portable peut comprendre deux dispositifs optiques 100 ; 100' agencés de sorte à être disposés chacun en regard d'un œil de l'utilisateur. Ainsi, il est possible de faire l'acquisition d'image en trois dimensions.

De préférence, quel que soit le mode de réalisation, le dispositif d'acquisition 200, 200' est monté directement sur le corps 10 ou fixé mécaniquement au corps 10. Le dispositif d'acquisition 200 peut notamment être monté ou fixé sur le corps 10 à l'extérieur de celui-ci. Le dispositif d'acquisition 200' peut notamment être monté ou fixé sur le corps 10' dans celui-ci.

Grâce aux objets décrits précédemment, il est possible de fournir des solutions optiques qui permettent l'observation d'un objet de petite taille avec un grossissement tout en permettant de partager le même axe de vison que l'utilisateur et en permettant de s'approcher suffisamment de l'objet. Les solutions décrites précédemment sont en effet peu encombrantes et permettent d'ausculter et d'intervenir sur des objets comme le fait un horloger à son établi. Il en résulte un partage d'informations et une transmission du savoir-faire qui sont facilités.

Pour parvenir à ces solutions, un dispositif optique est doté d'une caméra permettant de partager, sur un écran, l'axe de vision de l'horloger, tout en laissant à ce dernier la même liberté opérationnelle qu'avec une loupe d'horloger conventionnelle.

Selon les solutions décrites, un dispositif d'acquisition a été agencé au sein d'un dispositif optique, plus particulièrement au sein d'une loupe d'horloger. Avantageusement, le dispositif optique est muni d'une caméra qui partage le même axe de vision que l'horloger ou l'utilisateur au travers du dispositif optique.

Ainsi, il est possible de partager sur un écran annexe une vision la plus fidèle possible de ce que voit dans les faits l'horloger ou l'utilisateur, sans que ce dernier ne soit gêné par le dispositif d'acquisition ou qu'il doive modifier ses pratiques pour s'adapter à un instrument de vision tel qu'une binoculaire.

Avantageusement encore, dans les solutions décrites, une lentille est rapidement et facilement interchangeable avec d'autres lentilles présentant par exemple des focales différentes, sans que l'utilisateur ait besoin d'outils, voire même sans qu'il ait besoin de retirer le dispositif optique de son axe de vision.

En alternative aux caractéristiques d'acquisition d'au moins une partie des images vues par l'utilisateur au travers de la loupe d'horloger, bien que moins favorable pour le partage de l'axe de vision, notamment dans des zones difficilement accessibles, un dispositif d'acquisition peut être monté ou fixé sur le corps à l'extérieur de celui-ci de façon à capter en vision directe les images de l'objet observé. Les effets de parallaxe des images captées peuvent être corrigés par un traitement numérique adéquat.

Dans ce document, par « utilisateur », on entend toute personne susceptible d'utiliser le système portatif ou le dispositif optique. L'utilisateur peut notamment être un horloger ou un vendeur.

## Revendications

1. Loupe d'horloger (100 ; 100') monoculaire apte à être positionnée ou portée devant ou à proximité d'un œil d'un utilisateur, la loupe d'horloger comprenant :
- un premier axe optique (A1),
- un corps de loupe d'horloger (10 ; 10'), notamment un corps sensiblement cylindrique, et
- un dispositif d'acquisition (200 ; 200') d'au moins une partie des images vues par l'utilisateur au travers de la loupe d'horloger.

2. Loupe d'horloger selon la revendication précédente, **caractérisée en ce que** le dispositif d'acquisition (200) comprend un capteur (21) agencé en périphérie extérieure du corps (10), notamment au-dessus du corps (10) lorsque la loupe d'horloger (100) est positionnée devant l'œil de l'utilisateur pour être utilisé.

3. Loupe d'horloger selon la revendication 1 ou 2, **caractérisée en ce que** la loupe d'horloger (100) comprend un miroir semi-transparent (22) agencé au sein du corps (10) de sorte :
- à dévier une première partie des rayons lumineux entrant dans la loupe d'horloger (100) vers le capteur (21), et
- à laisser passer, à travers lui, vers l'œil de l'utilisateur, une deuxième partie des rayons lumineux entrant dans la loupe d'horloger (100).

4. Loupe d'horloger selon l'une des revendications 2 et 3, **caractérisée en ce que** le capteur (21) comprend un deuxième axe optique (A2) perpendiculaire au premier axe optique (A1).

5. Loupe d'horloger selon la revendication 1, **caractérisée en ce que** le dispositif d'acquisition (200') comprend un capteur (21') agencé au sein du corps (10').

6. Loupe d'horloger selon la revendication 5, **caractérisée en ce que** la loupe d'horloger (100') comprend un écran (40'), le capteur (21') et l'écran (40') étant agencés au sein du corps (10'), notamment coaxialement au premier axe optique (A1).

7. Loupe d'horloger selon l'une des revendications précédentes, **caractérisée en ce que** la loupe d'horloger (100 ; 100') comprend un élément de communication (50 ; 50') apte à transmettre des données générées par le dispositif d'acquisition (200 ; 200') et/ou apte à transmettre des données vers le dispositif d'acquisition (200 ; 200').

8. Loupe d'horloger selon l'une des revendications précédentes, **caractérisée en ce que** la loupe d'horloger (100 ; 100') comprend un système optique (11 ; 11'), notamment au moins une lentille (11 ; 11'), maintenu par un moyen de retenue (13 ; 13') sur le corps (10 ; 10').

9. Loupe d'horloger selon la revendication précédente, **caractérisée en ce que** le moyen de retenue (13 ; 13') est un moyen de retenue par friction, par clipsage ou par obstacle, notamment un moyen de retenue (13 ; 13') agencé de sorte à permettre une dépose et/ou un montage du système optique (11 ; 11') sans utilisation d'un outil.

10. Loupe d'horloger selon l'une des revendications précédentes, **caractérisée en ce que** la loupe d'horloger (100 ; 100') comprend un élément de projection (40, 41 ; 40') de données visuelles visibles par l'utilisateur par affichage sur un écran (40 ; 40') faisant partie de la loupe d'horloger (100 ; 100') et/ou par projection de rayons lumineux en direction de l'œil de l'utilisateur.

11. Loupe d'horloger selon la revendication précédente et selon la revendication 2, **caractérisée en ce que** l'élément de projection (40, 41) de données visuelles est agencé coaxialement au capteur (21) et à l'opposé du capteur (21) relativement au corps (10).

12. Loupe d'horloger selon la revendication 10 ou 11 et selon la revendication 3, **caractérisée en ce que** le miroir semi-transparent (22) est agencé de sorte :
- à dévier, vers l'œil de l'utilisateur, une première partie des rayons lumineux émis par l'élément de projection (40, 41), et
- à laisser passer, à travers lui, une deuxième partie des rayons lumineux émis par l'élément de projection (40, 41).

13. Loupe d'horloger selon l'une des revendications précédentes, **caractérisée en ce que** la loupe d'horloger (100 ; 100') comprend un élément d'éclairage (42 ; 42'), notamment un élément d'éclairage disposé de sorte à éclairer coaxialement au corps (10 ; 10').

14. Loupe d'horloger selon l'une des revendications précédentes, **caractérisée en ce que** la loupe d'horloger (100 ; 100') comprend un microphone (43 ; 43') et un module (53 ; 53') d'interprétation de sons, notamment un module (51 ; 51') d'interprétation de commandes vocales permettant de commander le dispositif d'acquisition (200 ; 200') et/ou l'élément de communication (50 ; 50') et/ou l'élément de projection (40, 41 ; 40') et/ou l'élément d'éclairage (42 ; 42') et/ou un module de traitement d'un signal sonore (52 ; 52') permettant de déterminer la marche d'un mouvement dont les sons sont acquis par le microphone (43 ; 43').

15. Système portatif (500) comprenant une loupe d'horloger e (100; 100') selon l'une des revendications précédentes et un support (300), notamment un casque ou une monture de lunettes (300) ou un serre-tête, sur lequel est monté le corps (10 ; 10') de la loupe d'horloger (100 ; 100').

16. Système portatif (500) selon la revendication précédente, **caractérisé en ce que** le système portatif (500), plus particulièrement le support (300), comprend :
- un élément de réglage (38, 39) agencé de sorte à positionner la loupe d'horloger (100 ; 100') relativement à l'œil de l'utilisateur, et/ou
- un ensemble de fixation (31, 32) agencé de sorte à permettre de dégager le dispositif optique (100 ; 100') de l'œil de l'utilisateur.
